# EUROPÄISCHE PATENTSCHRIFT

(11) **EP 3 467 519 B1**
(45) Veröffentlichungstag und Bekanntmachung des Hinweises auf die Patenterteilung: **29.11.2023**
(21) Anmeldenummer: 18186031.3
(22) Anmeldetag: 27.07.2018
(51) Int. Cl.: G01Q 30/04, G01Q 40/00, G01Q 70/06, G01Q 40/02

(54) **NANOPROBER UND VERFAHREN ZUM EINRICHTEN EINES NANOPROBERS**
NANOPROBER AND METHOD FOR SETTING UP SAME
SONDEUR NANO ET PROCÉDÉ DE RÉGLAGE D'UN SONDEUR NANO

(30) Priorität: 06.10.2017 DE 102017123287
(43) Veröffentlichungstag der Anmeldung: 10.04.2019
(73) Patentinhaber: Picofine GmbH, 26135 Oldenburg (DE)
(72) Erfinder: Kortschack, Axel, 26121 Oldenburg (DE)
(74) Vertreter: Eisenführ Speiser

(56) Entgegenhaltungen:
- JP-A- 2001 024 038
- JP-A- 2004 132 745
- KAWAKATSU H ET AL: "COMPARISON MEASUREMENT IN THE HUNDRED NANOMETER RANGE WITH A CRYSTALLINE LATTICE USING A DUAL TUNNELING-UNIT SCANNING TUNNELING MICROSCOPE", JOURNAL OF VACUUM SCIENCE AND TECHNOLOGY: PART B, AVS / AIP, MELVILLE, NEW YORK, NY, US, Bd. 12, Nr. 3, 1. Mai 1994 (1994-05-01), Seiten 1681-1685, XP000464737, ISSN: 1071-1023, DOI: 10.1116/1.587262

## Beschreibung

Die vorliegende Erfindung betrifft das Gebiet des sogenannten Nanoprobing und adressiert insbesondere Probleme im Zusammenhang mit Einbau und Austausch von Probernadeln, die beim Nanoprobing genutzt werden sollen.

Um eine Messung und Evaluation durch ein Vorab-Ausrichten der relativen Position mehrerer Prüfspitzen zur Evaluation eines Elements zu dem Kontaktpunkt der Prüfspitze und anschließendes Halten dieses Zustands für den Kontakt mit der Wafer-Oberfläche zu ermöglichen, wird in JP 2001-024038 A vorgeschlagen, dass unter der Bedingung, dass ein Wafer auf einer Bühne angeordnet und dann abwärts bewegt wird, ein Vorab-Ausrichtungssubstrat in einem Halter geladen und dann mit einem Vorab-Ausrichtungssubstratbewegungsmechanismus an einer vorbestimmten Position angeordnet. Wenn das Vorab-Ausrichtungssubstrat aus einem solchen Zustand ein wenig mit einem Prüfspitzenbewegungsmechanismus bewegt wird, wir die initiale Justierung durchgeführt, um die Endposition der Prüfspitze an der Außenseite eines Ausgangspunkts anzuordnen. Hinsichtlich dieser initialen Justierung wird die Position der Prüfspitze entsprechend dem ausgewählten Vorab-Ausrichtungssubstrates mit einem Computer bestimmt. Damit kann die Prüfspitze innerhalb eines bestimmten Fehlerbereichs mit dem

Wafer in Kontakt gebracht werden. Entsprechend wird eine vollautomatisierte Evaluation möglich.

Im Artikel "Comparison measurement in the hundred nanometer range with a crystalline lattice using a dual tunneling-unit scanning tunneling microscope" von H. Kawakatsu et al. (Journal of Vacuum Science and Technology, B; 12 (1994) Mai/Juni; Seiten 1681-1685) wird ein Dualtunneleinheits-Rastertunnelmikroskop ("dual tunneling unit scanning tunneling microscope") (DTU-STM) mit einer xy-Bühne zum simultanen Rastern von sowohl einer Probe als auch einem Skalenreferenzkristall beschrieben.

Technisch nutzbare Strukturen, wie die von integrierten Schaltkreisen (IC - Integrated Circuit), werden immer kleiner. Schon jetzt werden Strukturen im einstelligen Nanometerbereich erzeugt und die Miniaturisierung geht stetig weiter.

Bei der Herstellung (und Verwendung) der ICs entstehen Fehler, die es zu identifizieren und genau zu analysieren gilt, indem vor allem elektrische Messungen und Tests durchgeführt werden. Eine etablierte Technik ist das sogenannte Nanoprobing. Dabei werden eine oder mehrere Nadeln auf der Struktur platziert und Messungen durchgeführt.

Aufgrund der extrem kleinen Strukturgrößen können keine klassischen Prober (Micro-probing) eingesetzt werden. Diese sind weder dazu in der Lage, die Probernadeln fein genug aufgelöst zu bewegen, noch bieten die klassischen Prober die notwenige Infrastruktur für das Nanoprobing. Daher werden hier sogenannten Nanoprober eingesetzt, die häufig beispielsweise in der Vakuumkammer eines Rasterelektronenmikroskops zum Einsatz kommen. Es sind auch Nanoprober außerhalb des Rasterelektronenmikroskops bekannt. Dazu gehören Nanoprober, die ein optisches Mikroskop für die "Groborientierung" nutzen und bei denen die Nanoprobernadeln nicht nur für die elektrischen Messungen sondern auch als AFM-Nadeln herangezogen werden (AFM steht hierbei für "Atomic Force Microscope", also Rasterkraftmikroskop). Das Rasterkraftmikroskop dient der mechanischen Abtastung von Oberflächen und der Messung atomarer Kräfte auf der Nanometerskala (und kleiner). Die Oberflächen werden dabei mit über die Oberfläche bewegten AFM-Nadeln erfasst.

Im Zusammenhang mit dem Nanoprober werden Probernadeln also typischerweise als Nadeln eines Rasterkraftmikroskops und/oder zur Orientierung und Messung verwendet.

Selbstverständlich können die Nanoprober neben der elektrischen Analyse auch für andere Aufgaben verwendet werden. Dazu gehört z.B. das Vermessen und Anregen kleiner optischer Strukturen und auch die mechanische Überprüfung von Nanostrukturen und Mikro-elektro-mechanischen-Systemen (MEMS).

Für das Nanoprobing müssen in der Regel mehre Nadeln (Probernadeln) sehr präzise auf bzw. relativ zu einer zu vermessenden Struktur platziert und dabei meist in mechanischen Kontakt mit dieser Struktur gebracht werden. Bei den Probernadeln handelt es sich um Nadeln mit sehr feinen Spitzenradien, beispielsweise mit Spitzenradien von unter 2 nm. Die Nadeln bestehen häufig aus feinem Wolframdraht, dessen Spitze geeignet geätzt oder mit einer FIB ausgeformt wurden. Es sind auch AFM-Cantilever mit feinen Spitzen für das Nanoprobing im Einsatz, die in einer großen Variantenvielfalt zur Verfügung stehen.

Die Spitzen der Nadeln werden mit Nanomanipulatoren exakt auf dem zu vermessenden Objekt positioniert und zueinander ausgerichtet.

Die Probernadeln werden zumeist händisch oder automatisch in den mechanischen Aufbau des Nanoprober eingebracht bzw. ausgetauscht. Dabei ist problematisch, dass die Geometrie der Nadeln auf der mikroskopischen Skala nicht immer gleich ist, so dass die exakte räumliche Lage der jeweiligen Probernadelspitze nach dem Einwechseln zunächst nicht bekannt ist. Das Einwechseln erfolgt bei der Arbeit mit einem Nanoprober immer wieder, da die Probernadeln während des Einsatzes verschleißen und auch mal zerstört werden. Da nach jedem Einwechseln die exakte räumliche Lage der Nadeln und insbesondere der Spitzen nicht bekannt ist, ist ein automatisches Anfahren einer Struktur mit den Nadelspitzen im Allgemeinen nicht möglich. Die Anwender sind daher darauf angewiesen, z.B. zunächst das Bild des Rasterelektronenmikroskops auszuwerten und dieses dann als Feedback zur Lagedetektion der Nadelspitzen zu nutzen.

Das ist ein umständlicher und langwieriger Prozess, der erfahrungsgemäß einen großen zeitlichen Teil der Arbeit mit einem Nanoprober einnimmt.

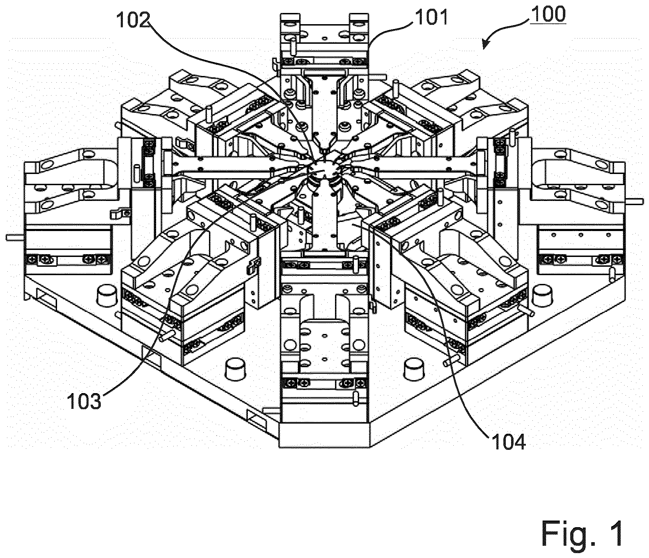

Fig. 1 zeigt schematisch einen bekannten Nanoprober 100, wie er von der Firma SmarAct GmbH angeboten wird, wobei hier mehrere Manipulatoren 101 vorgesehen sind, die jeweils dazu in der Lage sind, mit hoher Genauigkeit die Nanoprobernadeln 102 zueinander und auf oder an einem zu vermessenden Objekt 103 zu positionieren. Das in Fig. 1 illustrierte Beispiel weist neun XYZ-Nanomanipulatoren 101, 104 auf, von denen acht genutzt werden, um jeweils eine Nanoprobernadel 102 zu positionieren. Der neunte Nanomanipulator 104 wird verwendet, um das zu vermessende Objekt 103 zu positionieren. Selbstverständlich können die XYZ-Manipulatoren 101, 104 um weitere Freiheitsgrade, insbesondere rotatorische Freiheitsgrade erweitert werden. Die Anzahl der Manipulatoren und somit der gleichzeitig positionierbaren Nadeln kann je nach Anwendung unterschiedlich ausgewählt werden.

Typischerweise wird einer von zwei Ansätzen genutzt, um die Nadeln zueinander und vor allem auf dem zu vermessenden Objekt zu positionieren.

Ein erster Ansatz sieht vor, dass die Nadeln unter dem Einsatz eines Mikroskops (häufig einem Rastelektronenmikroskop) beim Positionierern vom Anwender beobachtet und über die Manipulatoren des Nanoprobers in Position gebracht werden. Das ist ein sehr zeitaufwendiger und fehlerträchtiger Vorgang. Es ist bekannt, dass Anwender eine maximale Anzahl an Nadeln in einen Nanoprober laden, auch an sich wenn weiniger Nadeln benötigt werden, damit Ersatznadeln zur Verfügungen stehen, sollten eine oder mehrere der Probernadeln Schaden nehmen oder anderweitig ausfallen.

Bei einem zweiten Ansatz kommt ein Vision-System zum Einsatz. Hier werden die Nadeln über ein Mikroskop visuell erfasst und dabei wird bei Verarbeitung der so erhaltenen Bilder in Echtzeit über Softwarealgorithmen die Position bestimmt. Aufgrund der kleinen Spitzenradien, die im Bereich der Auflösungsgrenze des Mikroskops liegen, ist das Verfahren nur begrenzt nutzbar, bzw. es werden stets die neuesten und damit in der Regel teureren Rasterelektronenmikroskope benötigt, um die Auflösung zu verbessern.

Ein der vorliegenden Erfindung zugrundeliegendes Ziel ist es, eine bessere Möglichkeit bereitzustellen, bei einem Nanoprober die exakte räumliche Positionierung der Probernadeln bzw. Probernadelspitzen, insbesondere zueinander, zu bestimmen, was dann bei Kenntnis eines Referenzsystems zu einer absoluten Positionsbestimmung genutzt werden kann.

Es ist daher gewünscht, eine Lösung vorzustellen, die es ermöglicht, die exakte Position der Nadeln zueinander zu bestimmen und in einer weiteren Ausführung die exakte räumliche Lage der Probernadeln zu einem Referenzobjekt zu bestimmen.

Erfindungsgemäß wird nach einem ersten Aspekt ein Nanoprober vorgeschlagen, wie er in Anspruch 1 definiert ist, nämlich mit einem ersten Manipulator, der dazu ausgestaltet ist, eine erste Probernadel mit einer ersten Nadelspitze im Raum zu bewegen, wobei diese Bewegung durch ein erstes Koordinatensystem beschreibbar ist, einem zweiten Manipulator, der dazu ausgestaltet ist, eine zweite Probernadel mit einer zweiten Nadelspitze im Raum zu bewegen, wobei diese Bewegung durch ein zweites Koordinatensystem beschreibbar ist, und einem Referenzobjekt, dessen Oberfläche räumlich so ausgestaltet ist, dass durch Bestimmung einer vorbestimmten Anzahl von Messpunkten für die erste Nadelspitze und die zweite Nadelspitze im ersten und zweiten Koordinatensystem das erste und das zweite Koordinatensystem zueinander in Beziehung setzbar sind, wobei sich ein Messpunkt durch eine Berührung einer Nadelspitze mit dem Referenzobjekt und/oder eine Annäherung der Nadelspitze an die Oberfläche des Referenzobjekts auf weniger als einen vordefinierten Abstand ergibt.

Erfindungsgemäß wird nach einem zweiten Aspekt ein Verfahren zum Einrichten eines Nanoprobers vorgeschlagen, wie es in Anspruch 8 definiert ist, nämlich mit Bewegen einer ersten Probernadel mit einer ersten Nadelspitze durch einen ersten Manipulator des Nanoprobers im Raum, wobei diese Bewegung durch ein erstes Koordinatensystem beschreibbar ist, und Bewegen einer zweiten Probernadel mit einer zweiten Nadelspitze durch einen zweiten Manipulator des Nanoprobers im Raum, wobei diese Bewegung durch ein zweites Koordinatensystem beschreibbar ist, wobei das Bewegen der Probernadel jeweils zur Bestimmung einer vorbestimmten Anzahl von Messpunkten für die erste Nadelspitze und die zweite Nadelspitze im ersten und zweiten Koordinatensystem ausgestaltet ist, wobei sich ein Messpunkt durch eine Berührung der Nadelspitze mit einem Referenzobjekt und/oder eine Annäherung der Nadelspitze an eine Oberfläche des Referenzobjekts auf weniger als einen vordefinierten Abstand ergibt, wobei die Oberfläche des Referenzobjekts räumlich so ausgestaltet ist, dass durch die vorbestimmte Anzahl an Messpunkte das erste und das zweite Koordinatensystem zueinander in Beziehung setzbar sind, wobei das Einrichten des Nanoprobers eine Bestimmung der Beziehung zwischen dem ersten und dem zweiten Koordinatensystem umfasst.

Erfindungsgemäß wird nach einem dritten Aspekt ein Computerprogramm vorgeschlagen, wie es in Anspruch 10 definiert ist, das Programmmittel enthält, die eine Steuereinheit, die dazu ausgestaltet ist, den ersten und zweiten Manipulator eines Nanoprobers nach einem der Ansprüche 1 bis 7 zu steuern, und die dazu ausgestaltet ist, aus den Messpunkten die Beziehung zwischen dem ersten und dem zweiten Koordinatensystem zu bestimmen, dazu veranlassen, die Schritte des Verfahrens nach Anspruch 8 oder 9 auszuführen, wenn das Computerprogramm auf der Steuereinheit ausgeführt wird.

Die Lage der Probernadeln zueinander soll möglichst exakt ermittelt werden, ohne dabei die feinen Spitzen zu beschädigen. Die Positionsermittlung erlaubt dann dem Prober, die Nadeln zueinander exakt zu positionieren, was wiederum eine exakte, vollautomatische Positionierung der Probernadeln zueinander (und mit etwas Zubehör auch relativ zum zu vermessenden Objekt) ermöglichen kann.

Dafür ist eine Auflösung im Nanometerbereich, idealerweise im Sub-Nanometerbereich, sowohl vom Bewegungssystem, als auch von der Messtechnik von Vorteil.

Bei vorteilhaften Implementierungen der Erfindung wird davon ausgegangen, dass die Manipulatoren, welche die Probernaden bewegen, über hochauflösende Sensoren überwacht werden (können), so dass deren Relativbewegung gemessen werden kann. Dabei spielt es keine Rolle, ob die Sensoren in den Manipulatoren integriert sind oder ob mit extern angeordneten Sensoren, wie z.B. Laserinterferometern gearbeitet wird.

Um die Lage der Nadelspitzen in einem ersten Ausführungsbeispiel zu erfassen, wird ein Referenzobjekt vorgesehen, welches eine Fläche oder mehrere Flächen aufweist, über die die Lage der Spitzen im Raum bestimmt werden kann, wobei zudem vorgesehen ist, dass ein Kontakt oder "Beinahe-Kontakt" eines Probernadel mit einer solchen Fläche detektiert werden kann.

Zur Erfassung eines solchen Kontakt oder "Beinahe-Kontakts" kann beispielsweise eine Messung eines elektrischen Kontakts zwischen einer Probernadel und eines Referenzobjektes genutzt werden, wobei zwischen den beiden Körpern eine Spannungsdifferenz aufgebaut wird, so dass bei der Berührung beider Körper ein detektierbarer Strom fließt, was über einen Sensor erfasst werden kann. Eleganter ist es, wenn keine wirkliche Berührung stattfindet, um somit die empfindlichen Probernadeln vor Abnutzung / Beschädigung / Zerstörung zu schützen. Hier bietet es sich an, die Annäherung wie im Falle eines Rastertunnelmikroskops zu realisieren. Die Nadeln werden in diesem Fall nur so nahe an das Referenzobjekt angenähert, bis ein gewisser Tunnelstrom fließt und detektiert wird. In diesem Beispiel eines "Beinahe-Kontakts" berührt die Nadel das Referenzobjekt nicht und die empfindliche Spitze wird geschont. Es können auch Techniken der Rasterkraftmikroskopie zum Einsatz kommen, wobei hier zwischen berührenden (Kontakt-Mode) und nicht berührenden (Nicht-Kontakt-Modus) und Intermittierenden Techniken unterschieden werden kann. Auf eine der AFM-Techniken zurückzugreifen bietet sich insbesondere dann an, wenn der Prober sowieso die Funktionalität eines AFM aufweist. Selbstverständlich sind auch andere Techniken der Annäherung denkbar, beispielsweise (optische) Rasternahfeldmikroskopie oder auch andere Techniken aus dem Bereich der Rastersondenmikroskopie.

Das Referenzobjekt weist eine Form auf, die - gegebenenfalls unter Einbeziehung weiterer Randbedingungen, etwa einer anderweitig vorgegebenen oder erhaltenen Kenntnis zu einer Orientierung der Probernadel - eine eindeutige räumliche Lagebestimmung der Nadeln ermöglicht, wobei idealerweise die Form des (nicht notwendigerweise aus nur einem einziger Körper bestehenden) Referenzobjekts allein eine vollständige Lagebestimmung der Spitze der jeweiligen Probernadel relativ zu einem durch das Referenzobjekt gegebenen Referenzpunkt erlaubt.

Im einem Ausführungsbeispiel weist das Referenzobjekt drei Flächen auf, die idealerweise rechtwinklig zueinander stehen. Wenn nun auf jeder Fläche mit einer Nadel drei Punkte angefahren werden, so ist der Schnittpunkt der der ermittelten Ebenen eindeutig. Wird das nun für jede Nadel einmal wiederholt, so ist für jede Nadel die relative Position zu den anderen Nadeln bekannt, so dass die Nadeln zueinander und miteinander präzise bewegt werden können. Vorteilhaft bei der Verwendung von Flächen ist, dass dabei auch die Winkelstellung der Bewegungsachsen der Manipulatoren zueinander festgestellt werden können, so dass mögliche Fehlstellungen ausgeglichen werden können, wenn einzelne Ebnen in mehr als nur drei Punkten angefahren werden.

Alternativ (oder auch ergänzend zum obigen) wird in einem zweiten Ausführungsbeispiel eine Kugel als Referenzobjekt herangezogen. Über das Anfahren von drei unterschiedlichen Punkten auf der Oberfläche lässt sich der Mittelpunkt der Kugel bestimmen. Werden von jeder Nadel drei Punkte auf der Kugel bestimmt, so ist der Mittelpunkt der Kugel, relativ zu jeder der Nadeln bekannt, so dass die Nadeln zueinander und miteinander präzise bewegt werden können.

Werden etwa zwei Kugeln mit einer festen Ortsbeziehung zueinander als Referenzobjekt vorgesehen, die beide von den Nadeln ausgetastet werden können, so kann die Winkelstellung der Bewegungsachsen der Manipulatoren zueinander festgestellt werden, so dass mögliche Fehlstellungen ausgeglichen werden können.

Hinsichtlich einer Lagebestimmung der Probernadeln zum zu vermessenden Objekt können insbesondere verschiedene Ansätze genutzt werden, einschließlich der Möglichkeit, die Lage des Referenzobjektes relativ zum zu vermessenden Objekt festzustellen, wobei hierzu das Referenzobjekt selbst so ausgestattet sein kann, dass es die Oberfläche des zu messenden Objektes ertasten (oder anderweitig erfassen) kann (z.B. mit einer der oben genannten Techniken). Dafür wird entweder das Referenzobjekt an die zu vermessende Struktur geführt und/oder das vermessende Objekt wird an die Referenzstruktur geführt werden.

Im Rahmen der vorliegenden Erfindung ist allerdings aber schon ausreichend, wenn lediglich mit einer der Probernadeln die Oberfläche des zu vermessenden Objektes ermittelt wird, z.B. in dem eine der oben genannten Techniken genutzt wird.

Darüber hinaus wurde gefunden, dass in einem Fall, bei dem es sich bei dem zu vermessenden Objekt um eine Fläche oder ein flächenartigen Aufbau handelt, was bei ICs häufig zutrifft, die Probernadel, indem drei Punkte auf der Fläche bestimmt werden, eben auch die Lage des zu vermessenden Objektes bestimmen kann. Damit können alle Nadeln sehr einfach zueinander oberhalb oder auf der Fläche des zu vermessenden Objektes platziert werden. Da die Steigung der Ebene (Lage) bekannt ist, können die Nadeln abhängig davon wie weit sie vom Messpunkt der ersten Nadel platziert werden unterschiedlich hohe Positionen anfahren, so dass diese die Oberfläche eben nicht ungewollt berühren.

Selbstverständlich kann die Annäherung dieser ersten Nadel auch teleoperiert (also über den Manipulator aber über die Hand gesteuert) erfolgen.

Idealerweise ist die Referenzstruktur (namentlich das Referenzobjekt) so angeordnet, dass diese bei der Vermessung des zu vermessenden Objektes nicht stört, wobei die Referenzstruktur selbst beweglich angeordnet sein kann, z.B. auf einem Positionierer, so dass diese aus einem kritischen Bereich herausgefahren werden kann.

Die vorliegende Erfindung kann mit anderen, an sich bekannten Techniken kombiniert werden. So bietet es sich z.B. an, die Technik der Bilderkennung zu nutzen, um die Orientierung auf den zu vermessenden Strukturen durchzuführen und auch, um darüber einen Abgleich mit evtl. vorhanden CAD-Daten zum zu vermessenden Objekt durchzuführen und darüber die Nadeln an Zielpositionen zu steuern.

Anstatt von rechtwinkligen Flächen und Kugel können auch andere bekannte Strukturen, wie z.B. ein Ovoid, gewählt werden, soweit ein eindeutiger Punkt zu ermitteln ist, über den dann die relative Lage der Nadeln zueinander bestimmbar ist. Ein Ovoid oder Körper mit einer vergleichbaren Form können wiederum genutzt werden, um nicht nur einen zentralen Punkt zu ermitteln, sondern auch mögliche Fehlstellungen der verschiedenen Manipulatoren zueinander, was genutzt werden kann, um die dann bekannte Fehlstellung auszugleichen.

Das Einmessen der Nadeln ist auch hilfreich, wenn nach einem manuellen oder automatischen Wechsels einer oder einiger Nadeln die Lage dieser einen oder mehreren Nadeln im Verhältnis zu den bereits eingemessenen Nadeln bestimmt werden soll, ohne dass alle Nadeln neu eingemessen werden müssen.

Wenn im Rasterelektronenmikroskop gearbeitet wird, kann auch ausgenutzt werden, dass sich bei der Berührung dargestellte Helligkeiten ändern, da z.B. Aufladungen ausgeglichen werden, so dass auch auf diese Weise ein Form eines Beinahe-Berührungsdetektors realisiert werden kann.

Wenn die Positionen der Nadelspitzen bekannt sind, könnend die Nadeln automatisch kollisionsfrei zueinander positioniert werden, was es ermöglicht, dass Schritte, die bisher teleoperiert durchgeführt werden nun automatisiert werden. Dazu gehört zum Beispiel das Reinigen der Nadeln über das Cross-Cleaning, bei der je zwei Nadeln in Kontakt gebracht werden und dann ein Stromfluss durch die Nadeln erzeugt wird, die sich dabei lokal erhitzen, so dass diese dabei gereinigt werden.

Die im Zusammenhang der Erfindung eingesetzten Manipulatoren sind vorzugsweise Manipulatoren, die voneinander unabhängige Bewegungen in drei Raumrichtungen (XYZ-Richtungen) durchführen können, wobei zudem vorgesehen sein kann, dass die Manipulatoren auch weitere Freiheitsgrade aufweisen (Rotation). Die vorliegende Erfindung ist allerdings nicht hierauf beschränkt und es kann ebenfalls vorgesehen werden, dass die Manipulatoren für eine Positionierung der jeweiligen Probernadel über rotatorische Bewegungen ausgestaltet sind. Es kann auch vorgesehen sein, dass die Positionierung über eine geeignete Kombination rotatorischer und translatorischer Freiheitsgrade erreicht wird, wobei zudem die Manipulatoren nicht sämtlich baugleich oder äquivalent sein müssen, also auch unterschiedliche Manipulatoren gemeinsam eingesetzt werden können.

In einer vorteilhaften Ausgestaltung eines Aspekts der Erfindung weist der Nanoprober eine Steuereinheit auf, die dazu ausgestaltet ist, den ersten und zweiten Manipulator zu steuern, und die dazu ausgestaltet ist, aus den Messpunkten die Beziehung zwischen dem ersten und dem zweiten Koordinatensystem zu bestimmen.

Eine solche Steuereinheit kann durch einen geeigneten Mikroprozessor realisiert werden, der in den Nanoprober selbst integriert ist, wobei allerdings auch ein eigenständiger Computer die Funktion der Steuereinheit ausführen kann.

In bevorzugten Varianten der obigen Ausgestaltung ist die Steuereinheit dazu ausgestaltet, die erste Nadelspitze und die zweite Nadelspitze in einem vorbestimmten Abstand zueinander zu bringen, insbesondere für ein Cross-Cleaning der Nadelspitzen, den ersten und/oder zweiten Manipulator so zu steuern, dass die jeweilige Nadelspitze mit einem vorbestimmten Punkt oder Bereich des Referenzobjekts in Berührung kommt und/oder sich dem vorbestimmten Punkt oder Bereich des Referenzobjekts auf weniger als einen vordefinierten Abstand nähert, und/oder wenigstens einen der Manipulatoren so zu steuern, dass mit der jeweiligen Nadelspitze eine vorbestimmte Anzahl von Objektmesspunkten erhalten werden, wobei sich ein Objektmesspunkt durch eine Berührung der Nadelspitze mit einem durch den Nanoprober zu vermessenden Objekt und/oder eine Annäherung der Nadelspitze an die Oberfläche des zu vermessenden Objekts auf weniger als einen vordefinierten Abstand ergibt.

Durch die genaue Kenntnis der relativen Position der Nadelspitzen zueinander, können diese z.B. zu Reingungszwecken (das an sich bekannte "Cross-Cleaning") oder dergleichen aneinander angenähert werden.

Durch die Kontaktierung oder Beinahe-Kontaktierung eines vorbestimmten Punkts oder Bereich des Referenzobjekts ist es möglich, Informationen über die räumliche Ausgestaltung der Spitze der Probernadel zu erhalten, insbesondere in Relation zu einem ansonsten beobachtbaren Abschnitt der Probernadel. So kann bei einer Ausprägung der Erfindung die unterste Stelle einer Nadel exakt detektiert werden, so dass feinste Strukturen auf dem zu vermessenden Objekt genau mit dieser untersten Stelle exakt angefahren werden können.

Eine vorteilhafte Ausgestaltung des erfindungsgemäßen Verfahrens sieht dementsprechend vor, dass das Bewegen einer Probernadel so ausgeführt wird, dass die jeweilige Nadelspitze mit einem vorbestimmten Punkt oder Bereich des Referenzobjekts in Berührung kommt und/oder sich dem vorbestimmten Punkt oder Bereich des Referenzobjekts auf weniger als einen vordefinierten Abstand nähert, wobei durch das in Berührung Kommen oder die Annäherung auf weniger als den vorbestimmten Abstand eine relative Position der Nadelspitze zu einem beobachtbaren Teil der Probernadel bestimmt wird.

In einer anderen vorteilhaften Ausgestaltung eines Aspekts der Erfindung weist der Nanoprober einen ersten Positionssensor, der ausgestaltet ist, eine Bewegung der ersten Probernadel und/oder des ersten Manipulators zu messen, und einen zweiten Positionssensor auf, der ausgestaltet ist, eine Bewegung der zweiten Probernadel und/oder des zweiten Manipulators zu messen.

Auch wenn es theoretisch - bei ausreichend reproduzierbarer Positioniergenauigkeit - genügt, lediglich eine Postionierung über die Manipulatoren vorzunehmen und aus der Ansteuerung der Manipulatoren auf die tatsächliche Position zurückzuschließen, erlaubt das Vorsehen von Positionssensoren eine genauere Bestimmung.

In anderen vorteilhaften Ausgestaltungen eines Aspekts der Erfindung weist das Referenzobjekt eine Oberfläche auf, die drei Flächen mit bekanntem Verlauf und bekannter Lage zueinander umfasst, die vorzugsweise jeweils plan sind und in einem rechten Winkel zueinander angeordnet sind, wenigstens einen Teil einer Kugelfläche umfasst, vorzugsweise einen Teil einer ersten Kugelfläche und einen Teil einer zweiten Kugelfläche mit einem von der ersten Kugelfläche abweichenden Mittelpunkt, und/oder wenigstens einen Teil eine Ovoidoberfläche umfasst.

Es hierbei nicht notwendig, dass eine komplette Kugeloberfläche oder die Oberfläche eine kompletten Ovoiden zur Nutzung bei dem Referenzieren zur Verfügung steht, solange die nutzbaren Ausschnitte derartiger Oberflächen die relative Bestimmung zu einem Referenzpunkt (z.B. dem Kugelmittelpunkt) erlauben.

Es können sowohl konvexe als auch konkave Ausgestaltungen genutzt werden. Beispielsweise kann auch anstelle einer Kugel als Referenzobjekt eine kugelförmige (z.B. halbkugelförmige) Ausnehmung Verwendung finden.

In einer anderen vorteilhaften Ausgestaltung eines Aspekts der Erfindung ist ein Referenzobjektmanipulator Teil des Nanoprobers, der dazu ausgestaltet ist, das Referenzobjekt im Raum zu bewegen.

Mit einer derartigen Beweglichkeit des Referenzobjekts kann dieses, wenn es gerade nicht nur Referenzierung genutzt werden muss, aus einem Arbeitsbereich des Nanoprobers entfernt werden, um Kollisionen oder Behinderungen zu vermeiden.

In einer anderen vorteilhaften Ausgestaltung eines Aspekts der Erfindung weist der Nanoprober wenigstens einen Kontaktdetektor auf, der dazu ausgestaltet ist, die Berührung einer Nadelspitze mit dem Referenzobjekt und/oder die Annäherung der Nadelspitze an die Oberfläche des Referenzobjekts auf weniger als den vordefinierten Abstand zu erfassen, insbesondere unter Erfassung eines Tunnelstroms zwischen Referenzobjekt und Nadelspitze, unter Erfassung atomarer Kräfte zwischen Referenzobjekt und Nadelspitze und/oder unter Erfassung eines Aufladungsausgleichs in einem Elektronenmikroskop.

Neben Ansätzen, die der Rastertunnelmikroskopie, der Rasterkraftmikroskopie oder der Elektronenmikroskopie entlehnt sind, sind auch andere Möglichkeiten vorstellbar, eine Kontaktierung oder Beinahe-Kontaktierung zu erfassen.

Erfindungsgemäß wird nach einem weiteren Aspekt ein Computerprogramm mit Programmmitteln vorgeschlagen, die eine Steuereinheit, die dazu ausgestaltet ist, den ersten und zweiten Manipulator eines erfindungsgemäßen Nanoprobers zu steuern, und die dazu ausgestaltet ist, aus den Messpunkten die Beziehung zwischen dem ersten und dem zweiten Koordinatensystem zu bestimmen, dazu veranlassen, die Schritte des erfindungsgemäßen Verfahrens auszuführen, wenn das Computerprogramm auf der Steuereinheit ausgeführt wird. Das Computerprogramm kann auf einem geeigneten Speichermedium, etwa einem optischen Speichermedium oder einem nicht-flüchtigen elektronischen Speichermedium, vorgesehen, gespeichert und/oder vertrieben werden. Es kann auch zusammen mit oder als Teil einer Hardware-Komponente bereitgestellt werden. Das Computerprogramm kann auch auf andere Weise bereitgestellt werden, etwa über das Internet oder über drahtgebundene oder drahtlose Telekommunikationsmittel.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines bekannten Nanoprobers,
- Fig. 2: eine schematische und vereinfachte Darstellung eines ersten Ausführungsbeispiels eines erfindungsgemäßen Nanoprobers,
- Fig. 3: eine schematische und vereinfachte Darstellung eines zweiten Ausführungsbeispiels eines erfindungsgemäßen Nanoprobers,
- Fig. 4: eine schematische Darstellung zur Erläuterung eines Aspekts eines weiteren Ausführungsbeispiels des erfindungsgemäßen Nanoprobers und
- Fig. 5: ein schematisches Ablaufdiagramm eines Ausführungsbeispiels des erfindungsgemäßen Verfahrens.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

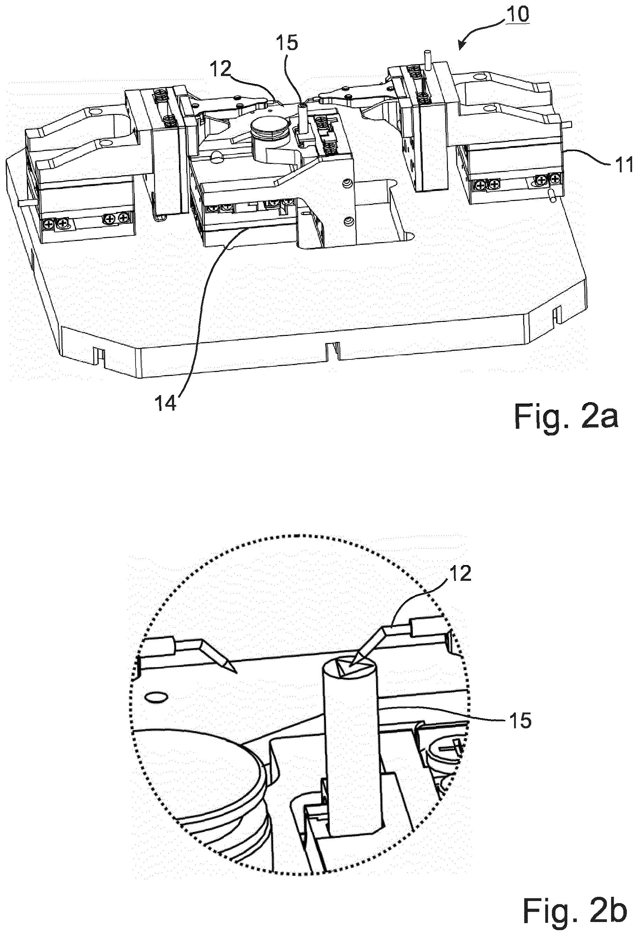

Fig. 2 zeigt eine schematische und vereinfachte Darstellung eines ersten Ausführungsbeispiels eines erfindungsgemäßen Nanoprobers.

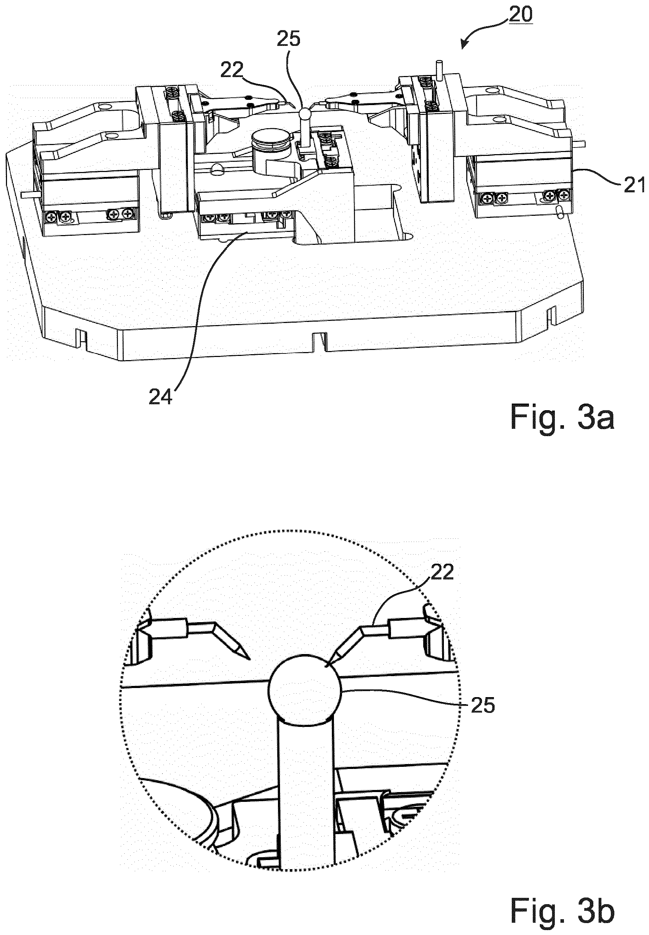

Der Übersichtlichkeit halber ist in Fig. 2 lediglich eine Anordnung gezeigt, bei der der Nanoprober 10 mit zwei Probernadeln 12 ausgestattet ist, die jeweils von einem Manipulator 11 getragen werden. Es ist dem Fachmann klar, dass auch eine andere Anzahl von Probernadeln eingesetzt werden kann. Steuerelektronik und Sensorik sind ebenfalls der Übersichtlichkeit halber nicht dargestellt. Gleiches gilt im Übrigen auch für Fig. 3

Das Referenzobjekt 15, das hier an einem Manipulator 14 angebracht ist, der auch zum Tragen eines zu vermessenden Objekts vorgesehen ist, ist hier mit drei zueinander rechtwinklig angeordneten Flächen ausgestattet, die in der Ausschnittsvergrößerung von Fig. 2b gegenüber Fig. 2a besser zu erkennen sind. Die Flächen sind am oberen Ende des Referenzobjekts 15 so vorgesehen, dass sich eine konkave Ausnehmung an der Spitze des Referenzobjekts 15 ergibt, in die die Nadelspitzen der Probernadeln 12 eingebracht werden können.

Fig. 3 zeigt eine schematische und vereinfachte Darstellung eines zweiten Ausführungsbeispiels eines erfindungsgemäßen Nanoprobers.

Das Ausführungsbeispiel, das in Fig. 3a in einer zu Fig. 2a vergleichbaren Gesamtschau und im Ausschnitt von Fig. 3b teilweise vergrößert dargestellt ist, unterscheidet sich von dem aus Fig. 2 lediglich darin, dass anstelle des Referenzobjekts 15 das Referenzobjekt 25 vorgesehen ist, an dessen Spitze sich eine Kugel befindet, die von den Probernadeln 22 des Nanoprobers 20 zur Positionsbestimmung genutzt werden kann. Wie auch im obigen Ausführungsbeispiel ist das Referenzobjekt 25 auf einen Manipulator 24 angebracht, der auch für ein zu vermessendes Objekt (nicht dargestellt) vorgesehen ist. Es sei hier bemerkt, dass das Referenzobjekt gegenüber dem Nanoprober ortsfest oder mit einem eigenen Manipulator vorgesehen werden kann, was auch für das obige Ausführungsbeispiel gilt.

Die Probernadeln 22 werden auch hier von Manipulatoren 21 getragen.

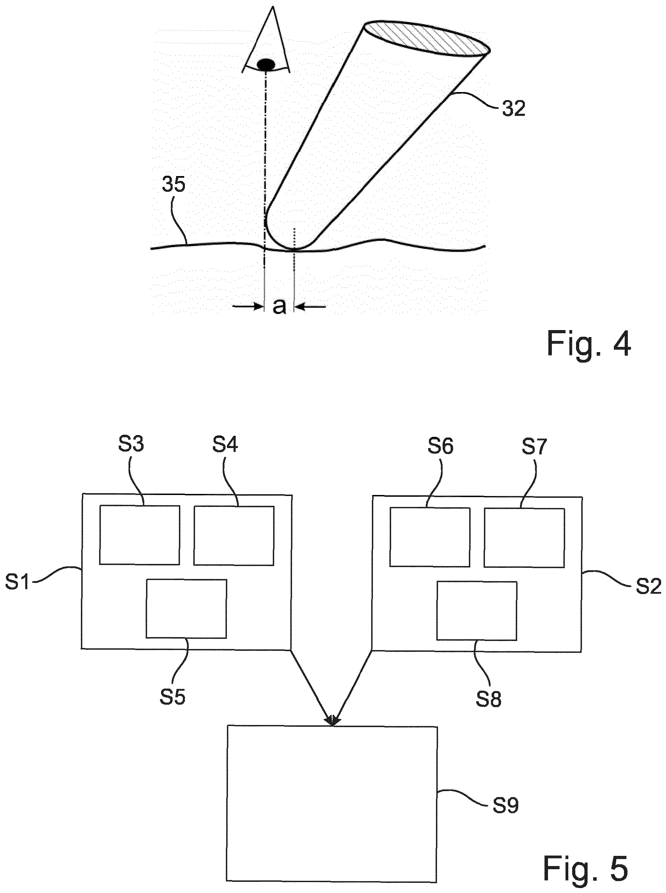

Fig. 4 zeigt eine schematische Darstellung zur Erläuterung eines Aspekts eines weiteren Ausführungsbeispiels des erfindungsgemäßen Nanoprobers, wobei hier lediglich ein Abschnitt einer Probernadel 32 im Kontakt mit einer Oberfläche eines Referenzobjekts gezeigt ist.

Wenn die Probernadel 32 von oben beobachtet wird (schematisch angedeutet), dann erkennt der Anwender nur die von oben sichtbaren Struktur, hier somit eben nur den vorderen Bereich der Probernadel 32, gekennzeichnet durch die Strichpunkt-Line. Der tatsächliche Kontakt findet aber an der tiefsten Stelle der Probernadel 32 statt, gekennzeichnet durch die Punk-Linie. Wenn die Probernadel 32 eine so klare Geometrie wie in Fig. 4 hat und der Spitzenradius der Probernadel 32 bekannt ist, dann kann die Differenz aus dem Radius der Probernadelspitze bestimmt werden. In der Realität stehen die Spitzen von Probernadeln aber nicht so definiert aus, so dass durch eine Beobachtung der Nadeln von oben die tatsächliche Kontaktstelle unbekannt bleibt.

Fig. 5 zeigt ein schematisches Ablaufdiagramm eines Ausführungsbeispiels des erfindungsgemäßen Verfahrens.

Das Verfahren sieht ein Bewegen S1 einer ersten Probernadel mit einer ersten Nadelspitze durch einen ersten Manipulator des Nanoprobers im Raum vor. Hierbei ist diese Bewegung durch ein erstes Koordinatensystem beschreibbar.

Das Bewegen S1 der ersten Probernadel umfasst ein Anfahren und Bestimmen S3, S4, S5 mehrerer Messpunkte (hier drei, wobei je nach Details insbesondere des Referenzobjekts auch mehr Messpunkte nötig sein können), so dass die Oberfläche des Referenzobjekts damit im ersten Koordinatensystem bekannt ist.

Das Verfahren sieht ferner auch ein Bewegen S2 einer zweiten Probernadel mit einer zweiten Nadelspitze durch einen zweiten Manipulator des Nanoprobers im Raum vor. Hierbei ist diese Bewegung wiederum durch ein zweites Koordinatensystem beschreibbar.

Das Bewegen S2 der zweiten Probernadel umfasst ein Anfahren und Bestimmen S6, S7, S8 mehrerer Messpunkte (hier drei, wobei je nach Details insbesondere des Referenzobjekts auch mehr Messpunkte nötig sein können), so dass die Oberfläche des Referenzobjekts damit auch im zweiten Koordinatensystem bekannt ist.

Ein Messpunkt ergibt sich jeweils durch eine Berührung der Nadelspitze mit dem Referenzobjekt und/oder eine Annäherung der Nadelspitze an eine Oberfläche des Referenzobjekts auf weniger als einen vordefinierten Abstand.

Die Oberfläche des Referenzobjekts ist hierbei räumlich so ausgestaltet, dass durch die vorbestimmte Anzahl an Messpunkte das erste und das zweite Koordinatensystem zueinander in Beziehung setzbar sind, da nämlich mit einer Kenntnis der Lage (und ggf. Orientierung) des Referenzobjekts im ersten Koordinatensystem und einer Kenntnis der Lage (und ggf. Orientierung) des Referenzobjekts im zweiten Koordinatensystem eine Transformationsmöglichkeit von einem Koordinatensystem ins andere zur Verfügung steht.

Entsprechend umfasst das Einrichten des Nanoprobers eine Bestimmung S9 der Beziehung zwischen dem ersten und dem zweiten Koordinatensystem.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

In Implementierungen der Erfindung können jeweils einzelne Komponenten, z.B. ein Prozessor, ganz oder teilweise die Funktionen verschiedener in den Ansprüchen genannter Elemente übernehmen. Abläufe oder Vorgänge wie beispielsweise eine Steuerung eines Manipulators, eine Verrechnung der Koordinatensystem zueinander, eine Überwachung eines Beinahe-Kontakts, die Verarbeitung von Positionssensordaten usw. können als Programmmittel eines Computerprogramms und/oder als spezielle Hardwarekomponenten implementiert werden.

## Patentansprüche

1. Nanoprober (10, 20), mit
einem ersten Manipulator (11, 21), der dazu ausgestaltet ist, eine erste Probernadel (12, 22, 32) mit einer ersten Nadelspitze im Raum zu bewegen, wobei diese Bewegung durch ein erstes Koordinatensystem beschreibbar ist,
einem zweiten Manipulator (11, 21), der dazu ausgestaltet ist, eine zweite Probernadel (12, 22, 32) mit einer zweiten Nadelspitze im Raum zu bewegen, wobei diese Bewegung durch ein zweites Koordinatensystem beschreibbar ist, und
einem Referenzobjekt (15, 25), dessen Oberfläche räumlich so ausgestaltet ist, dass durch Bestimmung einer vorbestimmten Anzahl von Messpunkten für die erste Nadelspitze und die zweite Nadelspitze im ersten und zweiten Koordinatensystem das erste und das zweite Koordinatensystem zueinander in Beziehung setzbar sind, wobei sich ein Messpunkt durch eine Berührung einer Nadelspitze mit dem Referenzobjekt (15, 25) und/oder eine Annäherung der Nadelspitze an die Oberfläche des Referenzobjekts auf weniger als einen vordefinierten Abstand ergibt.

2. Nanoprober (10, 20) nach Anspruch 1, ferner mit:
einer Steuereinheit, die dazu ausgestaltet ist, den ersten und zweiten Manipulator (11, 21) zu steuern, und die dazu ausgestaltet ist, aus den Messpunkten die Beziehung zwischen dem ersten und dem zweiten Koordinatensystem zu bestimmen.

3. Nanoprober (10, 20) nach Anspruch 2, wobei die Steuereinheit dazu ausgestaltet ist,
- die erste Nadelspitze und die zweite Nadelspitze in einem vorbestimmten Abstand zueinander zu bringen, insbesondere für ein Cross-Cleaning der Nadelspitzen,
- den ersten und/oder zweiten Manipulator (11, 21) so zu steuern, dass die jeweilige Nadelspitze mit einem vorbestimmten Punkt oder Bereich des Referenzobjekts (15, 25) in Berührung kommt und/oder sich dem vorbestimmten Punkt oder Bereich des Referenzobjekts (15, 25) auf weniger als einen vordefinierten Abstand nähert, und/oder
- wenigstens einen der Manipulatoren (11, 21) so zu steuern, dass mit der jeweiligen Nadelspitze eine vorbestimmte Anzahl von Objektmesspunkten erhalten werden, wobei sich ein Objektmesspunkt durch eine Berührung der Nadelspitze mit einem durch den Nanoprober zu vermessenden Objekt und/oder eine Annäherung der Nadelspitze an die Oberfläche des zu vermessenden Objekts auf weniger als einen vordefinierten Abstand ergibt.

4. Nanoprober (10, 20) nach einem der vorstehenden Ansprüche, ferner mit:
einem ersten Positionssensor, der ausgestaltet ist, eine Bewegung der ersten Probernadel (12, 22) und/oder des ersten Manipulators (11, 21) zu messen, und
einem zweiten Positionssensor, der ausgestaltet ist, eine Bewegung der zweiten Probernadel (12, 22) und/oder des zweiten Manipulators (11, 21) zu messen.

5. Nanoprober (10, 20) nach einem der vorstehenden Ansprüche, wobei das Referenzobjekt (15, 25) eine Oberfläche aufweist, die
- drei Flächen mit bekanntem Verlauf und bekannter Lage zueinander umfasst, die vorzugsweise jeweils plan sind und in einem rechten Winkel zueinander angeordnet sind,
- wenigstens einen Teil einer Kugelfläche umfasst, vorzugsweise einen Teil einer ersten Kugelfläche und einen Teil einer zweiten Kugelfläche mit einem von der ersten Kugelfläche abweichenden Mittelpunkt, und/oder
- wenigstens einen Teil eine Ovoidoberfläche umfasst.

6. Nanoprober (10, 20) nach einem der vorstehenden Ansprüche, mit einem Referenzobjektmanipulator (14, 24), der dazu ausgestaltet ist, das Referenzobjekt (15, 25) im Raum zu bewegen.

7. Nanoprober (10, 20) nach einem der vorstehenden Ansprüche, ferner mit:
wenigstens einem Kontaktdetektor, der dazu ausgestaltet ist, die Berührung einer Nadelspitze mit dem Referenzobjekt (15, 25) und/oder die Annäherung der Nadelspitze an die Oberfläche des Referenzobjekts (15, 25) auf weniger als den vordefinierten Abstand zu erfassen, insbesondere unter Erfassung eines Tunnelstroms zwischen Referenzobjekt (15, 25) und Nadelspitze, unter Erfassung atomarer Kräfte zwischen Referenzobjekt (15, 25) und Nadelspitze und/oder unter Erfassung eines Aufladungsausgleichs in einem Elektronenmikroskop.

8. Verfahren zum Einrichten eines Nanoprobers (10, 20), mit
Bewegen (S1) einer ersten Probernadel (12, 22) mit einer ersten Nadelspitze durch einen ersten Manipulator (11, 21) des Nanoprobers (10, 20) im Raum, wobei diese Bewegung durch ein erstes Koordinatensystem beschreibbar ist, und
Bewegen (S2) einer zweiten Probernadel (12, 22) mit einer zweiten Nadelspitze durch einen zweiten Manipulator (11, 21) des Nanoprobers (10, 20) im Raum, wobei diese Bewegung durch ein zweites Koordinatensystem beschreibbar ist,
wobei das Bewegen (S1, S2) der Probernadeljeweils zur Bestimmung (S3, S4, S5, S6, S7, S8) einer vorbestimmten Anzahl von Messpunkten für die erste Nadelspitze und die zweite Nadelspitze im ersten und zweiten Koordinatensystem ausgestaltet ist,
wobei sich ein Messpunkt durch eine Berührung der Nadelspitze mit einem Referenzobjekt (15, 25) und/oder eine Annäherung der Nadelspitze an eine Oberfläche des Referenzobjekts (15, 25) auf weniger als einen vordefinierten Abstand ergibt,
wobei die Oberfläche des Referenzobjekts (15, 25) räumlich so ausgestaltet ist, dass durch die vorbestimmte Anzahl an Messpunkte das erste und das zweite Koordinatensystem zueinander in Beziehung setzbar sind,
wobei das Einrichten des Nanoprobers (10, 20) eine Bestimmung (S9) der Beziehung zwischen dem ersten und dem zweiten Koordinatensystem umfasst.

9. Verfahren nach Anspruch 8,
wobei das Bewegen einer Probernadel (12, 22) so ausgeführt wird, dass die jeweilige Nadelspitze mit einem vorbestimmten Punkt oder Bereich des Referenzobjekts (15, 25) in Berührung kommt und/oder sich dem vorbestimmten Punkt oder Bereich des Referenzobjekts (15, 25) auf weniger als einen vordefinierten Abstand nähert,
wobei durch das in Berührung Kommen oder die Annäherung auf weniger als den vorbestimmten Abstand eine relative Position der Nadelspitze zu einem beobachtbaren Teil der Probernadel (12, 22) bestimmt wird.

10. Computerprogramm mit Programmmitteln, die eine Steuereinheit, die dazu ausgestaltet ist, den ersten und zweiten Manipulator (11, 21) eines Nanoprobers (10, 20) nach einem der Ansprüche 1 bis 7 zu steuern, und die dazu ausgestaltet ist, aus den Messpunkten die Beziehung zwischen dem ersten und dem zweiten Koordinatensystem zu bestimmen, dazu veranlassen, die Schritte des Verfahrens nach Anspruch 8 oder 9 auszuführen, wenn das Computerprogramm auf der Steuereinheit ausgeführt wird.

## Claims

1. A nanoprober (10, 20), comprising
a first manipulator (11, 21) which is configured to move a first prober needle (12, 22, 32) with a first needle tip in space, said movement being describable by a first coordinate system,
a second manipulator (11, 21) configured to move a second prober needle (12, 22, 32) with a second needle tip in space, said movement being describable by a second coordinate system, and
a reference object (15, 25), the surface of which is spatially configured in such a way that by determining a predetermined number of measuring points for the first needle tip and the second needle tip in the first and second coordinate system, the first and second coordinate system can be related to each other, wherein a measuring point results from a contact of a needle tip with the reference object (15, 25) and/or an approach of the needle tip to the surface of the reference object to less than a predefined distance.

2. The nanoprober (10, 20) according to claim 1, further comprising:
a control unit configured to control the first and second manipulators (11, 21) and configured to determine the relationship between the first and second coordinate systems from the measurement points.

3. The nanoprober (10, 20) according to claim 2, wherein the control unit is configured to,
- bring the first needle tip and the second needle tip to a predetermined distance from each other, in particular for cross-cleaning of the needle tips,
- control the first and/or second manipulator (11, 21) such that the respective needle tip comes into contact with a predetermined point or area of the reference object (15, 25) and/or approaches the predetermined point or area of the reference object (15, 25) to less than a predefined distance, and/or
- control at least one of the manipulators (11, 21) such that a predetermined number of object measurement points are obtained with the respective needle tip, wherein an object measurement point results from a contact of the needle tip with an object to be measured by the nanoprober and/or an approach of the needle tip to the surface of the object to be measured to less than a predefined distance.

4. The nanoprober (10, 20) according to any one of the preceding claims, further comprising:
a first position sensor configured to measure a movement of the first prober needle (12, 22) and/or the first manipulator (11, 21), and
a second position sensor configured to measure a movement of the second prober needle (12, 22) and/or the second manipulator (11, 21).

5. The nanoprober (10, 20) according to any one of the preceding claims, wherein the reference object (15, 25) has a surface that
- comprises three surfaces of known shape and position relative to each other, which are preferably planar and arranged at right angles to each other,
- comprises at least a part of a spherical surface, preferably a part of a first spherical surface and a part of a second spherical surface having a center different from the first spherical surface, and/or
- comprises at least a portion of an ovoid surface.

6. The nanoprober (10, 20) according to any one of the preceding claims, comprising a reference object manipulator (14, 24) configured to move the reference object (15, 25) in space.

7. The nanoprober (10, 20) according to any one of the preceding claims, further comprising:
at least one contact detector configured to detect the contact of a needle tip with the reference object (15, 25) and/or the approach of the needle tip to the surface of the reference object (15, 25) to less than the predefined distance, in particular by detecting a tunnel current between the reference object (15, 25) and the needle tip, by detecting atomic forces between the reference object (15, 25) and the needle tip and/or by detecting a charge balance in an electron microscope.

8. A method for setting up a nanoprober (10, 20), comprising
moving (S1) a first prober needle (12, 22) with a first needle tip by a first manipulator (11, 21) of the nanoprober (10, 20) in space, said movement being describable by a first coordinate system, and
moving (S2) a second prober needle (12, 22) with a second needle tip by a second manipulator (11, 21) of the nanoprober (10, 20) in space, said movement being describable by a second coordinate system,
wherein the moving (S1, S2) of the prober needle is designed to determine (S3, S4, S5, S6, S7, S8) a predetermined number of measuring points for the first needle tip and the second needle tip, respectively, in the first and second coordinate systems,
wherein a measuring point results from a contact of the needle tip with a reference object (15, 25) and/or an approach of the needle tip to a surface of the reference object (15, 25) to less than a predefined distance,
wherein the surface of the reference object (15, 25) is spatially configured such that the first and the second coordinate system can be related to each other by the predetermined number of measuring points,
wherein the setting up of the nanoprober (10, 20) comprises a determination (S9) of the relationship between the first and the second coordinate system.

9. The method according to claim 8,
wherein moving a prober needle (12, 22) is performed such that the respective needle tip comes into contact with a predetermined point or area of the reference object (15, 25) and/or approaches the predetermined point or area of the reference object (15, 25) to less than a predefined distance,
wherein coming into contact or approaching to less than the predetermined distance determines a relative position of the needle tip to an observable portion of the sample needle (12, 22).

10. A computer program comprising program means for causing a control unit configured to control the first and second manipulators (11, 21) of a nanoprober (10, 20) according to any one of claims 1 to 7 and configured to determine from the measurement points the relationship between the first and second coordinate systems to perform the steps of the method according to claim 8 or 9, when the computer program is executed on the control unit.

## Revendications

1. Sondeur nano (10, 20) avec
un premier manipulateur (11, 21) qui est configuré pour déplacer dans l'espace une première aiguille de sondeur (12, 22, 32) avec une première pointe d'aiguille, dans lequel ledit déplacement peut être décrit par un premier système de coordonnées,
un deuxième manipulateur (11, 21), qui est configuré pour déplacer dans l'espace une deuxième aiguille de sondeur (12, 22, 32) avec une deuxième pointe d'aiguille, dans lequel ledit déplacement peut être décrit par un deuxième système de coordonnées, et
un objet de référence (15, 25), dont la surface est configurée spatialement de telle sorte que le premier et le deuxième système de coordonnées peuvent être mis en relation l'un par rapport à l'autre par la définition d'un nombre prédéfini de points de mesure pour la première pointe d'aiguille et la deuxième pointe d'aiguille dans le premier et le deuxième système de coordonnées, dans lequel un point de mesure résulte d'un contact d'une pointe d'aiguille avec l'objet de référence (15, 25) et/ou d'un rapprochement de la pointe d'aiguille de la surface de l'objet de référence sur une distance inférieure à une distance prédéfinie.

2. Sondeur nano (10, 20) selon la revendication 1, avec en outre :
une unité de commande, qui est configurée pour commander le premier et le deuxième manipulateur (11, 21), et qui est configurée pour définir, à partir des points de mesure ; la relation entre le premier et le deuxième système de coordonnées.

3. Sondeur nano (10, 20) selon la revendication 2, dans lequel l'unité de commande est configurée
- pour amener à une distance prédéfinie l'une par rapport à l'autre la première pointe d'aiguille et la deuxième pointe d'aiguille, en particulier pour un nettoyage croisé des pointes d'aiguille,
- pour commander le premier et/ou le deuxième manipulateur (11, 21) de telle sorte que la pointe d'aiguille respective vient en contact avec un point ou une zone prédéfini(e) de l'objet de référence (15, 25) et/ou se rapproche du point ou de la zone prédéfini(e) de l'objet de référence (15, 25) sur une distance inférieure à une distance prédéfinie, et/ou
- pour commander au moins un des manipulateurs (11, 21) de telle sorte qu'un nombre prédéfini de points de mesure d'objet sont obtenus avec la pointe d'aiguille respective, dans lequel un point de mesure d'objet résulte d'un contact de la pointe d'aiguille avec un objet à mesurer par le sondeur nano et/ou d'un rapprochement de la pointe d'aiguille de la surface de l'objet à mesurer sur une distance inférieure à une distance prédéfinie.

4. Sondeur nano (10, 20) selon l'une quelconque des revendications précédentes, avec en outre :
un premier capteur de position, qui est configuré pour mesurer un déplacement de la première aiguille de sondeur (12, 22) et/ou du premier manipulateur (11, 21), et
un deuxième capteur de position, qui est configuré pour mesurer un déplacement de la deuxième aiguille de sondeur (12, 22) et/ou du deuxième manipulateur (11, 21).

5. Sondeur nano (10, 20) selon l'une quelconque des revendications précédentes, dans lequel l'objet de référence (15, 25) présente une surface, qui
- comprend trois surfaces avec une étendue connue et une position connue, qui sont de préférence respectivement planes et sont disposées selon un angle droit l'une par rapport à l'autre,
- comprend au moins une partie d'une surface sphérique, de préférence une partie d'une première surface sphérique et une partie d'une deuxième surface sphérique avec un point central différent de la première surface sphérique, et/ou
- comprend au moins une partie d'une face supérieure ovoïde.

6. Sondeur nano (10, 20) selon l'une quelconque des revendications précédentes, avec un manipulateur d'objet de référence (14, 24), qui est configuré pour déplacer dans l'espace l'objet de référence (15, 25).

7. Sondeur nano (10, 20) selon l'une quelconque des revendications précédentes, avec en outre :
au moins un détecteur de contact, qui est configuré pour détecter le contact d'une pointe d'aiguille avec l'objet de référence (15, 25) et/ou le rapprochement de la pointe d'aiguille de la surface de l'objet de référence (15, 25) sur une distance inférieure à la distance prédéfinie, en particulier en détectant un courant tunnel entre l'objet de référence (15, 25) et la pointe d'aiguille, en détectant des forces nucléaires entre l'objet de référence (15, 25) et la pointe d'aiguille et/ou en détectant une compensation de charge dans un microscope électronique.

8. Procédé destiné à installer un sondeur nano (10, 20), avec
déplacement (S1) d'une première aiguille de sondeur (12, 22) avec une première pointe d'aiguille par un premier manipulateur (11, 21) du sondeur nano (10, 20) dans l'espace, dans lequel ledit déplacement peut être décrit par un premier système de coordonnées, et
déplacement (S2) d'une deuxième aiguille de sondeur (12, 22) avec une deuxième pointe d'aiguille par un deuxième manipulateur (11, 21) du sondeur nano (10, 20) dans l'espace, dans lequel ledit déplacement peut être décrit par un deuxième système de coordonnées,
dans lequel le déplacement (S1, S2) de l'aiguille de sondeur est configuré respectivement pour définir (S3, S4, S5, S6, S7, S8) un nombre prédéfini de points de mesure pour la première pointe d'aiguille et la deuxième pointe d'aiguille dans le premier et le deuxième système de coordonnées,
dans lequel un point de mesure résulte d'un contact d'une pointe d'aiguille avec un objet de référence (15, 25) et/ou d'un rapprochement de la pointe d'aiguille d'une surface de l'objet de référence (15, 25) sur une distance inférieure à une distance prédéfinie,
dans lequel la surface de l'objet de référence (15, 25) est configurée spatialement de telle sorte que le premier et le deuxième système de coordonnées peuvent être mis en relation l'un par rapport à l'autre par le nombre prédéfini de points de mesure,
dans lequel l'installation du sondeur nano (10, 20) comprend une définition (S9) de la relation entre le premier et le deuxième système de coordonnées.

9. Procédé selon la revendication 8,
dans lequel le déplacement d'une aiguille de sondeur (12, 22) est exécuté de telle sorte que la pointe d'aiguille respective vient en contact avec un point ou une zone prédéfini(e) de l'objet de référence (15, 25) et/ou se rapproche du point ou de la zone prédéfinie(e) de l'objet de référence (15, 25) sur une distance inférieure à une distance prédéfinie,
dans lequel une position relative de la pointe d'aiguille par rapport à une partie pouvant être observée de l'aiguille de sondeur (12, 22) est définie par la mise en contact ou le rapprochement sur une distance inférieure à la distance prédéfinie.

10. Programme informatique avec des moyens de programme, qui amènent une unité de commande, qui est configurée pour commander le premier et le deuxième manipulateur (11, 21) d'un sondeur nano (10, 20) selon l'une quelconque des revendications 1 à 7 et qui est configurée pour définir, à partir des points de mesure, la relation entre le premier et le deuxième système de coordonnées, à exécuter les étapes du procédé selon la revendication 8 ou 9, lorsque le programme informatique est exécuté sur l'unité de commande.
